# EUROPÄISCHE PATENTANMELDUNG

(11) **EP 4 309 480 A1**
(43) Veröffentlichungstag der Anmeldung: **24.01.2024**
(21) Anmeldenummer: 23185323.5
(22) Anmeldetag: 13.07.2023
(51) Int. Cl.: A01B 69/00, B62D 13/00, A01B 69/04

(54) **LENKVERFAHREN FÜR EINE LANDMASCHINE**

(30) Priorität: 18.07.2022 DE 102022117884
(71) Anmelder: KRONE Agriculture SE, 48480 Spelle (DE); Lemken GmbH & Co KG, 46519 Alpen (DE)
(72) Erfinder: Müter, Matthias, 53179 Bonn (DE); Grever, Alexander, 49074 Osnabrück (DE); Menke, Stefan, 46354 Südlohn (DE)
(74) Vertreter: Hüseman, Julian

(57) **Zusammenfassung**

Die Erfindung betrifft ein Lenkverfahren für eine Landmaschine (10), welche während einer Straßenfahrt einem Führungsfahrzeug (30) folgt, welches entlang einer Führungs-Fahrspur (R_{F}) fährt. Um bei geringem technischen Aufwand einer Landmaschine zu ermöglichen, einem Führungsfahrzeug während einer Straßenfahrt möglichst präzise zu folgen, ist erfindungsgemäß vorgesehen, dass bei dem Lenkverfahren:
- durch wenigstens eine Trägheitsmessvorrichtung (11, 31, 41) jeweils Trägheitsmesswerte (M_{A1}, M_{A2}, M_{A3}) ermittelt werden (S120), die wenigstens einer mehrdimensionalen Beschleunigung entsprechen, wobei erste Trägheitsmesswerte (M_{A1}) durch eine an der Landmaschine (10) angeordnete erste Trägheitsmessvorrichtung (11) ermittelt werden, wobei wenigstens auf den ersten Trägheitsmesswerten (M_{A1}) basierende erste Kinematikdaten ermittelt werden (S140), die eine Kinematik der Landmaschine (10) beschreiben,
- wenigstens teilweise basierend auf den ermittelten Trägheitsmesswerten (M_{A1}, M_{A2}, M_{A3}), Fahrspur-Informationen betreffend das Führungsfahrzeug (20) ermittelt werden (S160) und die ersten Kinematikdaten hiermit abgeglichen werden (S200),
- in Abhängigkeit vom Ergebnis des Abgleichs automatisch Lenkkommandos (L₁, L₂) für wenigstens eine lenkbare Achse (14, 15) der Landmaschine (10) ermittelt werden (S220), um die Landmaschine (10) angepasst an die Führungs-Fahrspur (R_{F}) zu lenken, und
- die Landmaschine (10) automatisch durch die Lenkkommandos (L₁, L₂) gelenkt wird (S240).

## Beschreibung

Die vorliegende Erfindung betrifft ein Lenkverfahren für eine Landmaschine nach dem Oberbegriff von Anspruch 1 sowie eine Steuervorrichtung für eine Landmaschine nach dem Oberbegriff von Anspruch 15.

Bereits seit Langem sind zum einen Landmaschinen bekannt, die bei der Feldbearbeitung von einer Zugmaschine gezogen werden, sowie zum anderen selbstfahrende Landmaschinen, die bei der Feldbearbeitung von einem Fahrer gesteuert werden. Diese Maschinen können auch bei Überführungsfahrten oder Straßenfahrten, also auf dem Weg vom oder zum Feld, in gleicher Weise bewegt werden, also entweder von der Zugmaschine gezogen oder selbstfahrend durch den Fahrer gelenkt. Bei gezogenen Landmaschinen wird die Bremse vom Zugfahrzeug aus mit Energie versorgt und gesteuert. Soweit vorhanden, gilt dies auch für lenkbare Achsen der gezogenen Landmaschine. Daneben kommen in zunehmendem Maße auch autonom arbeitende Landmaschinen zum Einsatz, die über einen eigenen Antrieb und eigene Lenkung verfügen und die Feldbearbeitung selbstständig, ohne Steuerkommandos eines Fahrers durchführen. Da diese Fahrzeuge eine Überführungsfahrt im Straßenverkehr nicht autonom durchführen können, müssen sie zum Beispiel auf einen Tieflader verladen werden, was aufwändig ist und die Kosten für den gesamten Einsatz erhöht.

Eine mögliche Alternative besteht in der Kopplung an ein Zugfahrzeug, was aber wiederum andere Nachteile mit sich bringen kann. Die Landmaschine kann aufgesattelt werden, so dass zum Beispiel eine Achse vom Boden abgehoben wird, was wiederum zu einer stärkeren Belastung der anderen Achse(n) führt sowie möglicherweise einem Überschreiten einer zulässigen Achslast. Außerdem ist bei aufgesatteltem Transport eine aktive Lenkung der bodenberührenden Achse(n) wünschenswert, da die Landmaschine andernfalls Kurven, Kreuzungsecken etc. schneidet. Die entsprechende Lenkung kann über eine mechanische Kopplung an das Zugfahrzeug realisiert werden, welche allerdings wiederum einen erhöhtem Aufwand bedeutet.

Aufgabe der Erfindung ist es, bei geringem technischen Aufwand einer Landmaschine zu ermöglichen, einem Führungsfahrzeug während einer Straßenfahrt möglichst präzise zu folgen.

Die Aufgabe wird gelöst mit einem Lenkverfahren mit den Merkmalen des unabhängigen Patentanspruchs 1. Vorteilhafte Ausführungsformen sind den abhängigen Ansprüchen entnehmbar.

Dafür wird ein Lenkverfahren für eine Landmaschine geschaffen, welche während einer Straßenfahrt einem Führungsfahrzeug folgt, welches entlang einer Führungs-Fahrspur fährt, wobei:
- durch wenigstens eine Trägheitsmessvorrichtung jeweils Trägheitsmesswerte ermittelt werden, die wenigstens einer mehrdimensionalen Beschleunigung entsprechen, wobei erste Trägheitsmesswerte enthalten durch eine an der Landmaschine angeordnete erste Trägheitsmessvorrichtung ermittelt werden, wobei wenigstens auf den ersten Trägheitsmesswerten basierende erste Kinematikdaten ermittelt werden, die eine Kinematik der Landmaschine beschreiben,
- wenigstens teilweise basierend auf den ermittelten Trägheitsmesswerten, Fahrspur-Informationen betreffend das Führungsfahrzeug ermittelt werden, und die ersten Kinematikdaten hiermit abgeglichen werden,
- in Abhängigkeit vom Ergebnis des Abgleichs automatisch Lenkkommandos für wenigstens eine lenkbare Achse der Landmaschine ermittelt werden, um die Landmaschine angepasst an die Führungs-Fahrspur zu lenken, und
- die Landmaschine automatisch durch die Lenkkommandos gelenkt wird.

Die Landmaschine kann auch als landwirtschaftliche Arbeitsmaschine bezeichnet werden. Es kann sich insbesondere um eine Erntemaschine wie ein Feldhäcksler, ein Mähdrescher, eine Ballenpresse oder ein Ladewagen handeln. Es könnte sich aber auch zum Beispiel um einen Zetter, einen Pflug, einen Düngerstreuer, ein Güllefass oder dergleichen handeln. Die Landmaschine ist zur Feldbearbeitung eingerichtet, bspw. zum Pflügen, Düngen, Mähen, Zetten, zur Erntegutaufnahme oder dergleichen. Es kann sich bei der Landmaschine um einen Anhänger handeln, der bei der Feldbearbeitung von einer Zugmaschine gezogen wird. In diesem Fall wird sie auch bei einer Straßenfahrt oder Überführungsfahrt gezogen. Die Landmaschine kann allerdings auch einen eigenen Fahrantrieb aufweisen, der sie sowohl bei der Feldbearbeitung als auch während der Straßenfahrt antreibt. Sie kann als autonomes Fahrzeug ausgebildet sein, welches dazu eingerichtet ist, eine Feldbearbeitung ohne Steuerkommandos eines Fahrers oder Bedieners durchzuführen. Es wäre allerdings auch denkbar, dass die Landmaschine einen Führungsstand oder eine Fahrerkabine aufweist und bedarfsweise von einem Fahrer gesteuert werden kann. Im Zuge des erfindungsgemäßen Lenkverfahrens erfolgt allerdings eine automatische Lenkung, wie nachfolgend erläutert wird.

Beim erfindungsgemäßen Verfahren folgt die Landmaschine während einer Straßenfahrt einem Führungsfahrzeug, welches entlang einer Führungs-Fahrspur fährt. Der Begriff "Straßenfahrt" ist hier nicht streng auszulegen und bezieht sich auch auf Fahrten auf unbefestigten Wegen. Er wird hier gleichbedeutend mit "Überführungsfahrt" benutzt, bezeichnet also eine Fahrt vom oder zum Einsatzort. Das Führungsfahrzeug kann selbst eine Landmaschine sein, es kann sich aber auch um ein anderes Fahrzeug handeln, zum Beispiel einen Lkw. Normalerweise ist das Führungsfahrzeug ein Kraftfahrzeug mit eigenen Fahrantrieb, es könnte allerdings auch zum Beispiel ein Anhänger ohne eigenen Antrieb sein, der seinerseits gezogen wird. Es kann sich um ein Fahrzeug handeln, das durch einen Fahrer gelenkt wird oder um ein autonomes Fahrzeug. Das Führungsfahrzeug fährt entlang einer Route oder Fahrspur, die hier und im weiteren als Führungs-Fahrspur bezeichnet wird. Die Führungs-Fahrspur kann von kurzfristig erfolgenden Lenkaktionen eines Fahrers oder eines autonomen Lenksystems abhängen und unterliegt potenziell ständigen Veränderungen. Sie lässt sich somit nur in begrenztem Maß für die Zukunft vorhersagen. Die Landmaschine folgt dem Führungsfahrzeug, was allgemein bedeutet, dass das Führungsfahrzeug vorausfährt und die Landmaschine hinter dem Führungsfahrzeug fährt. Wie nachfolgend noch erläutert wird, bedeutet dies nicht zwangsläufig, dass die Landmaschine ebenfalls entlang der Führungs-Fahrspur fährt.

Gemäß einem Schritt des Verfahrens werden durch wenigstens eine Trägheitsmessvorrichtung jeweils Trägheitsmesswerte ermittelt, die wenigstens einer mehrdimensionalen Beschleunigung entsprechen, wobei erste Trägheitsmesswerte durch eine an der Landmaschine angeordnete erste Trägheitsmessvorrichtung ermittelt werden, wobei wenigstens auf den ersten Trägheitsmesswerten basierende erste Kinematikdaten ermittelt werden, die eine Kinematik der Landmaschine beschreiben. Die jeweilige Trägheitsmessvorrichtung ist dazu eingerichtet, Trägheitsmesswerte zu ermitteln. Diese Trägheitsmesswerte entsprechen wenigstens einer mehrdimensionalen Beschleunigung, was sowohl zweidimensionale als auch dreidimensionale Beschleunigungen einschließt. Zusätzlich zur (translatorischen) Beschleunigung kann die Trägheitsmessvorrichtung als Teil der Trägheitsmesswerte auch eine Winkelbeschleunigung messen, also eine zeitliche Veränderung einer Winkelgeschwindigkeit. Die Trägheitsmessvorrichtung weist bevorzugt wenigstens eine initiale Messeinheit auf, welche der Einfachheit halber nachfolgend mit der Abkürzung IMU (Inertial Measurement Unit) bezeichnet wird. Eine erste Trägheitsmessvorrichtung ist an der Landmaschine angeordnet und kann bspw. mit einem Rahmen der Landmaschine fest verbunden sein. Diese erste Trägheitsmessvorrichtung ermittelt erste Trägheitsmesswerte. Die Bezeichnung "erste Trägheitsmesswerte" dient lediglich zur Unterscheidung und impliziert weder eine Rangfolge noch das Vorhandensein weiterer Trägheitsmesswerte. Die ersten Trägheitsmesswerte entsprechen wenigstens einer mehrdimensionalen Beschleunigung der Landmaschine.

Wenigstens basierend auf diesen ersten Trägheitsmesswerten werden erste Kinematikdaten ermittelt, die eine Kinematik der Landmaschine beschreiben. Teilweise können die ersten Kinematikdaten auch mit den ersten Trägheitsmesswerten identisch sein oder in trivialer Weise mit diesen zusammenhängen. Insbesondere kann allerdings eine Berechnung der ersten Kinematikdaten erfolgen, die wenigstens teilweise auf den ersten Trägheitsmesswerten basiert. Insbesondere kann es sich um eine zeitliche Integration handeln, um aus der mehrdimensionalen Beschleunigung eine Geschwindigkeit sowie gegebenenfalls eine Position zu bestimmen, wobei Anfangswerte angegeben werden müssen, die sich aus der Integration nicht ergeben. In jedem Fall wird eine Kinematik der Landmaschine beschrieben, also die Bewegung der Landmaschine und/oder ihre aktuelle räumliche Anordnung. Die ersten Kinematikdaten können durch eine Steuereinheit ermittelt werden. Diese Steuereinheit kann insbesondere an der Landmaschine angeordnet sein, sie könnte aber auch zum Beispiel am Führungsfahrzeug oder an einem anderen Ort angeordnet sein. Sie kann auch mehrere, räumlich getrennte Komponenten aufweisen. Funktionen der Steuereinheit können teilweise softwaremäßig realisiert sein. Die Steuereinheit kann drahtlos oder drahtgebunden Trägheitsmesswerte von der wenigstens einen Trägheitsmessvorrichtung sowie gegebenenfalls weitere Daten empfangen.

Des Weiteren werden wenigstens teilweise basierend auf den ermittelten Trägheitsmesswerten, Fahrspur-Informationen betreffend das Führungsfahrzeug ermittelt und die ersten Kinematikdaten werden hiermit abgeglichen. Auch dieser Verfahrensschritt kann durch die Steuereinheit durchgeführt werden. Die Fahrspur-Informationen betreffen das Führungsfahrzeug und stehen insofern in Zusammenhang mit der Führungs-Fahrspur. Allerdings erlauben sie normalerweise keine exakte Beschreibung der Führungs-Fahrspur, bspw. aufgrund von Messfehlern innerhalb der Trägheitsmesswerte, numerischer Ungenauigkeiten oder anderer Einflüsse. In jedem Fall kann die Führungs-Fahrspur anhand der Fahrspur-Informationen wenigstens in begrenztem Maße sowie näherungsweise charakterisiert werden. Mit diesen Fahrspur-Informationen können die ermittelten ersten Kinematikdaten abgeglichen werden. Dieser Abgleich liefert eine Aussage darüber, wie die Landmaschine in Relation zur Führungs-Fahrspur positioniert ist und/oder wie sie sich in Relation zur Führungs-Fahrspur bewegt. Da die Führungs-Fahrspur im Allgemeinen nicht exakt bekannt ist, ist das Ergebnis des Abgleichs zwangsläufig ebenfalls im Allgemeinen nicht exakt. Allerdings sind gewisse Ungenauigkeiten akzeptabel und gefährden nicht das Funktionsprinzip des erfindungsgemäßen Lenkverfahrens.

In einem weiteren Verfahrensschritt werden in Abhängigkeit vom Ergebnis des Abgleichs automatisch Lenkkommandos für wenigstens eine lenkbare Achse der Landmaschine ermittelt, um die Landmaschine angepasst an die Führungs-Fahrspur zu lenken. Dieser Verfahrensschritt kann wiederum durch die Steuereinheit durchgeführt werden. Die Landmaschine kann eine oder mehrere lenkbare Achsen aufweisen. Die jeweilige Achse ist durch wenigstens einen Aktor lenkbar, wobei der tatsächliche Lenkwinkel durch einen zugeordneten Sensor überprüft werden kann. Im Falle mehrerer lenkbarer Achsen können Lenkkommandos für alle Achsen ermittelt werden. Alternativ ist aber auch denkbar, dass zum Beispiel nur die vordere oder vorderste Achse gelenkt wird, während die hintere(n) Achse(n) in Geradeausstellung arretiert bleiben. Bei den Lenkkommandos kann es sich um digitale oder analoge Signale handeln. In jedem Fall enthält ein Lenkkommando eine Information über den jeweiligen Lenkwinkel der lenkbaren Achse. Die Lenkkommandos werden ermittelt, um die Landmaschine angepasst an die Führungs-Fahrspur zu lenken. Gemäß einer Ausgestaltung kann das Ziel sein, dass die Landmaschine möglichst exakt der Führungs-Fahrspur folgt. Gemäß einer anderen Ausgestaltung kann vorgesehen sein, dass die Landmaschine zum Beispiel in einer Kurve seitlich versetzt zur Führungs-Fahrspur fährt. Grundsätzlich sind auch andere Ausgestaltungen denkbar, wobei sich die Lenkung der Landmaschine allerdings immer an der Führungs-Fahrspur orientiert. Die Lenkkommandos werden in Abhängigkeit von Ergebnis des Abgleichs ermittelt. Das heißt anhand des Abgleichs wird entschieden, wie die Landmaschine, basierend auf den ermittelten ersten Kinematikdaten, zu lenken ist, um die vorgesehene Anpassung an die Führungs-Fahrspur (soweit sie anhand der Fahrspur-Informationen bekannt ist) zu erreichen oder aufrechtzuerhalten.

In einem weiteren Schritt wird die Landmaschine automatisch durch die Lenkkommandos gelenkt. Auch dies kann durch die o.g. Steuereinheit erfolgen, die zu diesem Zweck drahtlos oder drahtgebunden mit wenigstens einem Lenkaktor verbunden sein kann, der der wenigstens einen lenkbaren Achse zugeordnet ist.

Der Vorteil des erfindungsgemäßen Lenkverfahrens liegt in der zumindest schwerpunktmäßigen, gegebenenfalls auch ausschließlichen Nutzung wenigstens einer Trägheitsmessvorrichtung, um die zum Lenken der Landmaschine notwendigen Messwerte zu gewinnen. Die jeweilige Trägheitsmessvorrichtung lässt sich wie oben beschrieben mit einer oder mehreren IMUs realisieren, die zum einen kostengünstig und zum anderen ausgesprochen robust sind. Insbesondere letztere Eigenschaft ist von besonderer Bedeutung, zumal die Landmaschine unter Umständen größeren Belastungen und härteren Einsatzbedingungen ausgesetzt ist als bspw. ein Pkw. Empfindlichere Sensortypen könnten hierbei beschädigt oder anderweitig beeinträchtigt werden.

Eine Ausführungsform sieht vor, dass die ermittelten Fahrspur-Informationen einer Berechnungs-Fahrspur des Führungsfahrzeugs entsprechen und die ersten Kinematikdaten einer Ist-Fahrspur der Landmaschine entsprechen, wobei die Ist-Fahrspur mit einer von der Berechnungs-Fahrspur abgeleiteten Soll-Fahrspur abgeglichen wird und in Abhängigkeit vom Ergebnis des Abgleichs die Lenkkommandos ermittelt werden. Die Berechnungs-Fahrspur wäre idealerweise identisch mit der Führungs-Fahrspur oder mit einem Teilstück derselben. In der Realität besteht im Allgemeinen eine Abweichung von der Führungs-Fahrspur, die allerdings innerhalb gewisser Grenzen akzeptabel ist. Die Berechnungs-Fahrspur kann bis zum aktuellen Zeitpunkt ermittelt werden, sie kann aber auch für eine gewisse Zeit in die Zukunft extrapoliert werden. Die Ist-Fahrspur ist entweder Teil der ersten Kinematikdaten, die basierend auf den ersten Trägheitsmesswerten ermittelt werden, oder sie ist mit diesen ersten Kinematikdaten identisch. Auch hierbei kann aufgrund von Messfehlern, numerischen Fehlern und anderen Einflüssen eine Abweichung zwischen der Ist-Fahrspur und der tatsächlich gefahrenen Fahrspur der Landmaschine bestehen, was allerdings ebenfalls innerhalb gewisser Grenzen akzeptabel ist. Auch die Ist-Fahrspur kann bis zum aktuellen Zeitpunkt ermittelt werden oder für eine gewisse Zeit in die Zukunft extrapoliert werden. In letzterem Fall kann zum Beispiel zugrunde gelegt werden, dass der Lenkwinkel der wenigstens einen lenkbaren Achse gegenüber dem aktuellen Zustand nicht verändert wird. Es wird eine Soll-Fahrspur für die Landmaschine ermittelt, die von der Berechnungs-Fahrspur abgeleitet ist. Sie kann mit der Berechnungs-Fahrspur identisch sein, kann aber auch in vorhergesehener Weise von dieser abweichen, zum Beispiel um einen seitlichen Versatz in einer Kurve zu realisieren. Durch einen Abgleich der Soll-Fahrspur mit der Ist-Fahrspur kann ermittelt werden, wie die Landmaschine gelenkt werden muss, um sich in vorgesehener Weise relativ zum Führungsfahrzeug zu bewegen. Da die Soll-Fahrspur von der Berechnungs-Fahrspur abgeleitet ist, findet hierbei auch ein (indirekter) Abgleich mit der Berechnungs-Fahrspur statt. Die Lenkkommandos werden dann entsprechend einer möglichen Abweichung der Ist-Fahrspur von der Soll-Fahrspur ermittelt.

Gemäß einer Ausführungsform ist die Landmaschine mechanisch vom Führungsfahrzeug entkoppelt. In diesem Fall besteht keine mechanische Verbindung zwischen den beiden Fahrzeugen. Eine andere Ausgestaltungen sieht vor, dass die Landmaschine durch eine zug- und druckübertragende Koppelstange mit dem Führungsfahrzeug verbunden ist, wobei die Koppelstange sowohl mit dem Führungsfahrzeug als auch mit der Landmaschine schwenkbar verbunden ist. Die Koppelstange kann normalerweise als starrer Körper angesehen werden, wenngleich es möglich ist, dass bspw. auch beim Normalbetrieb eine geringfügige elastische Verformung der Koppelstange erfolgt. Jedenfalls weist die Koppelstange in sich keine biegeweichen Bereiche oder Gelenke auf. Prinzipiell wäre eine Ausgestaltung denkbar, in welcher die Koppelstange aus zwei teleskopierend miteinander verbundenen Teilen besteht, zwischen denen ein Federelement zwischengeordnet ist. Auf diese Weise wäre eine Expansion oder Kompression der Koppelstange parallel zu ihrer Verlaufsrichtung möglich. Die Koppelstange verbindet das Führungsfahrzeug mit der Landmaschine. Dabei kann sie als Zugstange im eigentlichen Sinne fungieren, derart, dass das Führungsfahrzeug die Landmaschine zieht. Letztere verfügt bei dieser Ausführungsform normalerweise über keinen eigenen Fahrantrieb. Das Führungsfahrzeug kann in diesem Fall auch als Zugfahrzeug, Zugmaschine, Schlepper oder dergleichen bezeichnet werden. Optional kann es zum Beispiel eine Bremsanlage der Landmaschine betätigen und/oder die Landmaschine mit Energie versorgen. Es sind allerdings auch Ausführungsformen denkbar, bei denen die Landmaschine mit eigenem Fahrantrieb fährt. In jedem Fall ist die Koppelstange beiderseits schwenkbar verbunden, wobei wenigstens eine eindimensionale Schwenkbarkeit gegeben ist, also eine Schwenkbarkeit um einen eindimensionalen Winkel in der horizontalen Ebene. Zusätzlich ist normalerweise auch eine zumindest begrenzte Schwenkbarkeit in vertikaler Richtung gegeben, so dass von einer zweidimensionalen Schwenkbarkeit gesprochen werden kann. Die Koppelstange kann jeweils frei von Rückstellkräften schwenkbar sein, es wäre allerdings auch möglich, dass sie über wenigstens ein Federelement mit dem Führungsfahrzeug und/oder mit der Landmaschine verbunden ist.

Je nach Ausführungsform kann die an der Landmaschine angeordnete erste Trägheitsmessvorrichtung ausreichend sein, um die notwendigen Trägheitsmesswerte zur Bestimmung der Fahrspur-Informationen sowie der ersten Kinematikdaten zu erhalten. So können bspw. bei Vorhandensein einer Koppelstange Fahrspur-Informationen aus den übertragenen Kräften und hieraus resultierenden Beschleunigungen der Landmaschine abgeleitet werden. Fährt das Führungsfahrzeug eine Kurve, erfährt die Landmaschine über die Koppelstange eine seitliche Kraft, die zum Beispiel aufgrund der Nachgiebigkeit des Fahrwerks zu einer seitlichen Beschleunigung führt. Das heißt es ist möglich, nur über Trägheitsmessungen an der Landmaschine Rückschlüsse auf die Fahrspur des Führungsfahrzeugs zu gewinnen. In anderen Ausführungsformen kann eine weitere, nicht an der Landmaschine angeordnete Trägheitsmessvorrichtung eingesetzt werden. Eine solche Ausgestaltung sieht vor, dass durch eine am Führungsfahrzeug angeordnete zweite Trägheitsmessvorrichtung zweite Trägheitsmesswerte ermittelt werden und die Fahrspur-Informationen wenigstens teilweise basierend auf den zweiten Trägheitsmesswerten ermittelt werden. Die zweiten Trägheitsmesswerte betreffen selbstverständlich das Führungsfahrzeug. Sie können bspw. einer Beschleunigung sowie einer Winkelbeschleunigung des Führungsfahrzeugs entsprechen. Aus diesen zweiten Trägheitsmesswerten können zum Beispiel durch (numerische) zeitliche Integration die Geschwindigkeit, die Winkelgeschwindigkeit, der Ort und die Orientierung berechnet werden. Somit ist es prinzipiell möglich, die Fahrspur des Führungsfahrzeugs allein anhand der zweiten Trägheitsmesswerte (unter Hinzunahme von Anfangswerten) zu bestimmen. Die von der zweiten Trägheitsmessvorrichtung bestimmten zweiten Trägheitsmesswerte können drahtlos oder drahtgebunden an die o.g. Steuereinheit übermittelt werden.

Bevorzugt werden dabei wenigstens auf den zweiten Trägheitsmesswerten basierende zweite Kinematikdaten ermittelt, die eine Kinematik des Führungsfahrzeugs beschreiben. Die zweiten Kinematikdaten basieren wenigstens teilweise auf den zweiten Trägheitsmesswerten, Das heißt sie können entweder mithilfe der zweiten Trägheitsmesswerte berechnet werden oder sind gegebenenfalls auch mit diesen identisch. Die vollständige Beschreibung der Kinematik des Führungsfahrzeugs erlaubt eine vollständige Beschreibung der Fahrspur. Das heißt, die Fahrspur-Informationen können ganz oder teilweise durch die zweite Kinematikdaten des Führungsfahrzeugs gegeben sein. Insbesondere können die zweiten Kinematikdaten der o.g. Berechnungs-Fahrspur entsprechen.

Bevorzugt werden Kinematikdaten ermittelt, die einen Ort, eine Geschwindigkeit, eine Beschleunigung, eine Orientierung, eine Winkelgeschwindigkeit und/oder eine Winkelbeschleunigung beschreiben. Dies bezieht sich auf die ersten Kinematikdaten ebenso wie auf die zweiten Kinematikdaten. Insbesondere können die jeweiligen Kinematikdaten alle sechs der genannten Größen beschreiben. Die genannten Größen werden klassischerweise mit dem Begriff der Kinematik assoziiert und beschreiben die Position, einschließlich der Orientierung, sowie die zeitliche Veränderung derselben. Die Geschwindigkeit und die Beschleunigung entsprechen der ersten und zweiten zeitlichen Ableitung des Ortes. Jede der genannten Größen ist normalerweise eine wenigstens zweidimensionale Größe, gegebenenfalls auch eine dreidimensionale Größe. Ein zweidimensionaler Ort kann durch eine X- und eine Y-Koordinate charakterisiert werden, ein dreidimensionaler Ort zusätzlich durch eine Z-Koordinate. Die Winkelgeschwindigkeit und die Winkelbeschleunigung entsprechen der ersten und zweiten zeitlichen Ableitung der Orientierung. Jede dieser Größen ist wenigstens eindimensional, soweit eine Orientierung etc. innerhalb einer Ebene betrachtet wird. Es können aber auch zwei- oder dreidimensionale Orientierungen etc. betrachtet werden, die durch zwei oder drei Winkel charakterisiert werden können. Ein Beispiel wären Gierwinkel, Rollwinkel und Nickwinkel.

Gemäß einer bevorzugten Ausführungsform ermittelt eine an der Koppelstange angeordnete dritte Trägheitsmessvorrichtung dritte Trägheitsmesswerte und die Fahrspur-Informationen werden wenigstens teilweise basierend auf den dritten Trägheitsmesswerten ermittelt. Die dritte Trägheitsmessvorrichtung ist normalerweise starr mit der Koppelstange verbunden. Die von ihr gelieferten dritten Trägheitsmesswerte erlauben Rückschlüsse auf die Bewegung der Koppelstange, welche wiederum von der Bewegung des Führungsfahrzeugs gegenüber der Landmaschine abhängt. Die Bezeichnung "dritte" Trägheitsmessvorrichtung dient lediglich der Unterscheidung und impliziert nicht, dass gleichzeitig die oben beschriebene zweite Trägheitsmessvorrichtung am Führungsfahrzeug angeordnet sein muss. Tatsächlich ist die dritte Trägheitsmessvorrichtung typischerweise alternativ zur zweiten Trägheitsmessvorrichtung vorgesehen.

Insbesondere dann, wenn keine (zweite) Trägheitsmessvorrichtung am Führungsfahrzeug angeordnet ist, kann es sinnvoll sein, zunächst eine Bewegungsbahn der Koppelstange zu ermitteln, und basierend auf dieser auf die Fahrspur zu schließen. Eine derartige Ausgestaltung sieht vor, dass wenigstens teilweise basierend auf den dritten Trägheitsmesswerten Bewegungsbahn-Informationen über eine Bewegungsbahn der Koppelstange ermittelt werden und die Fahrspur-Informationen wenigstens teilweise auf den Bewegungsbahn-Informationen basieren. Die Bewegungsbahn der Koppelstange kann in entsprechender Weise ermittelt werden wie die Berechnungs-Fahrspur des Führungsfahrzeugs. Wenn diese Bewegungsbahn bekannt ist, sind Rückschlüsse auf die Berechnungs-Fahrspur möglich, wobei implizit die Information genutzt wird, dass die Koppelstange mit dem Führungsfahrzeug verbunden ist.

In der Regel werden die Fahrspur-Informationen und/oder die ersten Kinematikdaten teilweise basierend auf Geometriedaten ermittelt, die eine Geometrie des Führungsfahrzeug, der Koppelstange und/oder der Landmaschine beschreiben. Derartige Geometriedaten können zum Beispiel einer Länge des Führungsfahrzeug, der Koppelstange und/oder der Landmaschine entsprechen oder einem Achsabstand, einer Spurbreite oder anderer Charakteristika. Auch kann es sich um eine Information zur Relativposition bestimmter Komponenten eines Fahrzeugs handeln, zum Beispiel die Relativposition zweier Sensoren zueinander. Falls die Fahrspur-Informationen auf den o.g. Bewegungsbahn-Informationen basieren, können letztere basierend auf Geometriedaten ermittelt werden. Die entsprechenden Geometriedaten können in der Steuereinheit hinterlegt sein, die die entsprechenden Berechnungen durchführt, oder aus einer externen Quelle an die Steuereinheit übermittelt werden. Zum Beispiel kann aus der Orientierung der Koppelstange auf die Position eines Gelenkpunkts am Führungsfahrzeug geschlossen werden, wenn die Länge der Koppelstange und die Position eines Gelenkpunkts an der Landmaschine bekannt sind. Um letztere zu bestimmen, können wiederum Informationen über die Geometrie der Landmaschine genutzt werden. ZUM BEISPIEL kann die aktuell ermittelte Orientierung der Landmaschine in Kombination mit der Relativposition des Gelenkpunkts gegenüber der Position der ersten Trägheitsmessvorrichtung genutzt werden.

Unter Umständen kann es sinnvoll sein, zusätzlich zu der wenigstens einen Trägheitsmessvorrichtung noch andere Sensoren zu nutzen. Diese können zur Absicherung dienen, falls eine Trägheitsmessvorrichtung ausfallen sollte und/oder sie können Messwerte liefern, die mit den Trägheitsmesswerten abgeglichen werden, um so eine Fehlerkorrektur zu ermöglichen. Eine Ausführungsform sieht vor, dass die Fahrspur-Informationen und/oder die ersten Kinematikdaten zusätzlich zu den Trägheitsmesswerten teilweise basierend auf Messwerten wenigstens eines Zusatzsensors ermittelt werden. Der Zusatzsensor ist normalerweise an der Landmaschine, am Führungsfahrzeug oder - soweit vorhanden - an der Koppelstange angeordnet. Grundsätzlich wäre allerdings auch ein bezüglich der Fahrzeuggruppe externen Sensor denkbar. Als "Zusatzsensor" gilt in diesem Zusammenhang ein Sensor, der auf einem anderen Messprinzip beruht als die wenigstens eine Trägheitsmessvorrichtung. Der Zusatzsensor misst normalerweise auch keine Beschleunigung. Normalerweise werden die Trägheitsmesswerte und die Messwerte des Zusatzsensors gleichzeitig genutzt, es wäre aber auch denkbar, dass die Messwerte des Zusatzsensors nur zwischenzeitlich statt der Trägheitsmesswerte genutzt werden.

Sofern die Landmaschine über eine Koppelstange an das Führungsfahrzeug gekoppelt ist, kann wenigstens ein Zusatzsensor als Winkelsensor ausgebildet sein, der Winkelmesswerte ermittelt, die einem Relativwinkel der Koppelstange gegenüber dem Führungsfahrzeug und/oder der Landmaschine entsprechen. Es versteht sich, dass sowohl ein Winkelsensor zur Messung des Relativwinkels zwischen Koppelstange und Führungsfahrzeug als auch ein Winkelsensor zur Messung des Relativwinkels zwischen Koppelstange und Landmaschine eingesetzt werden kann. Der Begriff "Relativwinkel" schließt hier sowohl eine eindimensionale Winkelmessung ein, bei welcher nur bestimmt wird, wie weit die Koppelstange horizontal nach links und rechts schwenkt, als auch eine zweidimensionale Winkelmessung, bei welcher auch gemessen wird, wie weit die Koppelstange vertikal aufwärts und abwärts schwenkt.

Dabei können die Fahrspur-Informationen wenigstens teilweise basierend auf von einem Winkelsensor ermittelten Winkelmesswerten ermittelt werden. Über die Winkelmesswerte kann die Orientierung der Koppelstange relativ zum Führungsfahrzeug und/oder zur Landmaschine unter Umständen mit hoher Präzision bestimmt werden. Unter Einbeziehung der geometrischen Abmessungen der Koppelstange lässt sich hierdurch bspw. ausgehend von Position und Orientierung der Landmaschine die Position eines Gelenkpunktes am Führungsfahrzeug bestimmen, ohne dass auf Sensoren am Führungsfahrzeug zurückgegriffen werden müsste. Diese Information kann mit anderen Sensordaten kombiniert werden, um Position und/oder Bewegung des Führungsfahrzeug insgesamt nachzuvollziehen.

Eine bevorzugte Ausgestaltungen sieht vor, dass wenigstens ein Zusatzsensor als Orientierungssensor ausgebildet ist, der Orientierungsmesswerte ermittelt, die einer Orientierung der Landmaschine, der Koppelstange und/oder des Führungsfahrzeugs gegenüber einer Umgebung derselben entsprechen. Während bspw. eine IMU lediglich Informationen über eine Veränderung einer Orientierung liefern kann, kann der Orientierungssensor die Orientierung als solche messen. Es handelt sich dabei gewissermaßen um eine "absolute" Orientierungsangabe gegenüber der Umgebung. In zwei Dimensionen entspricht die Orientierungsangabe bspw. einer Himmelsrichtung. Eine derartige Orientierung kann bspw. mittels eines Kreiselkompass bestimmt werden, was eine prinzipiell zuverlässige, allerdings kostenintensive Lösung darstellt. Kostengünstiger, wenngleich unter Umständen störungsanfällig, wäre ein Magnetometer, welches das Erdmagnetfeld zur Messung der Orientierung nutzt. Physisch kann ein solches Magnetometer gegebenenfalls auch in einer IMU integriert sein. Unabhängig von dem zugrunde liegenden Konstruktionund Messprinzip kann jeweils ein Kompromiss zwischen Genauigkeit der Sensoreinheit und anfallenden Kosten gefunden werden.

Die Trägheitsmessvorrichtungen erlauben keine unmittelbare Positionsmessung und auch keine unmittelbare Messung einer zurückgelegten Wegstrecke. Diese Informationen können nur durch zweimalige (numerische) Integration der Beschleunigungen ermittelt werden, was im Allgemeinen zu numerischen Fehlern führen kann, die im zeitlichen Verlauf zunehmen. Dieser Nachteil kann gemäß einer Ausgestaltung dadurch kompensiert werden, dass ein Zusatzsensor als Wegstreckensensor ausgebildet ist, der Wegstreckenmesswerte ermittelt, die einer zurückgelegten Wegstrecke der Landmaschine und/oder des Führungsfahrzeugs entsprechen. Der Wegstreckensensor kann auch als Odometer bezeichnet werden und die Wegstreckenmesswerte können als Odometriedaten bezeichnet werden. Hierbei wird normalerweise die Anzahl der Umdrehungen eines Rades gemessen und mit dessen bekanntem Abrollumfang multipliziert, um die zurückgelegte Wegstrecke zu bestimmen. Ein solcher Wegstreckensensor kann an der Landmaschine und/oder am Führungsfahrzeug angeordnet sein.

Insbesondere, allerdings nicht ausschließlich, wenn die Landmaschine durch keine Koppelstange mit dem Führungsfahrzeug verbunden ist, kann es sinnvoll sein, die Relativposition der beiden Fahrzeuge durch zusätzliche Sensoren zu überprüfen. Dementsprechend sieht eine vorteilhafte Ausführungsform vor, dass wenigstens ein Zusatzsensor als an der Landmaschine angeordneter Positionssensor ausgebildet ist, der Positionsmesswerte ermittelt, die einer Relativposition des Führungsfahrzeugs zur Landmaschine entsprechen. Der Positionssensor kann bspw. als Ultraschallsensor, Radar-Sensor oder Lidar-Sensor ausgebildet sein. Er kann auch als Kamera ausgebildet sein (die gegebenenfalls auch für Infrarot empfindlich sein kann), wobei mittels Bilderkennung bestimmte Strukturen am Führungsfahrzeug identifiziert und über deren Anordnung und scheinbare Größe innerhalb des Kamerabilds die Relativposition erkannt wird. Hierzu müssen selbstverständlich auf Seiten einer entsprechenden Auswertungseinheit Informationen über die Geometrie des Führungsfahrzeugs hinterlegt sein. Selbstverständlich können auch unterschiedliche Typen von Positionssensoren miteinander kombiniert werden. Allgemein kann der wenigstens eine Positionssensor auch dazu genutzt werden, eine eventuelle Drift der wenigstens einen Trägheitsmessvorrichtung zu kompensieren. Alternativ oder zusätzlich könnte wenigstens ein Positionssensor auch am Führungsfahrzeug angeordnet sein.

Wenngleich typische kommerziell erhältliche IMUs robust und kostengünstig sind, können sie gegebenenfalls zu Messfehlern unterschiedlichen Ursprungs neigen. So kann zum Beispiel eine Drift der gelieferten Messwerte vorliegen, die im zeitlichen Verlauf die Messwerte zunehmend unzuverlässig werden lässt. Diesen und anderen Messfehlern kann durch das Prinzip der Redundanz begegnet werden. Eine Ausgestaltung sieht vor, dass wenigstens eine Trägheitsmessvorrichtung eine Mehrzahl von inertialen Messeinheiten aufweist, die zueinander redundante Messwerte liefern, wobei zwischen diesen Messwerten auftretende Diskrepanzen zur Fehlerkorrektur genutzt werden. Nicht alle Messwerte müssen zueinander redundant sein, jedoch gilt dies zumindest für einige. Eine Mehrzahl von Messwerten ist redundant, wenn in Abwesenheit von Messfehlern einer der Messwerte sich bei Kenntnis wenigstens eines anderen Messwerts (gegebenenfalls auch mehrerer anderer Messwerte) exakt vorhersagen ließe. Beispielsweise sollten zwei im Abstand zueinander an der Landmaschine angeordnete IMUs identische Werte für die Winkelbeschleunigung der Landmaschine liefern. Gleiches gilt bei Geradeausfahrt für die Beschleunigung der Landmaschine. Sofern die IMUs innerhalb der Landmaschine unterschiedlich orientiert sind, wirkt sich dies natürlich auf die IMU-intern ermittelten Werte aus, bewirkt aber zum Beispiel nur eine andere Zuordnung im IMU-internen Koordinatensystem. Abweichungen, die sich nicht durch die unterschiedliche Einbauposition und -orientierung erklären lassen, deuten auf einen Messfehler wenigstens eines IMUs hin. In diesem Fall existieren unterschiedliche Korrekturverfahren, wie aus den nicht im Einklang stehenden Messwerten ein Wert ermittelt werden kann, der dem wahren Wert wahrscheinlich nahe kommt. Bei der Redundanz kommen wiederum die geringen Anschaffungskosten eines IMUs zum Tragen. So wirkt sich die Integration von bspw. drei, vier oder fünf IMUs in eine Trägheitsmessvorrichtung nur unwesentlich auf den Gesamtpreis zum Beispiel einer hiermit versehenen Landmaschine aus.

Die Aufgabe wird weiterhin gelöst mit einer Steuervorrichtung für eine Landmaschine, welche dazu eingerichtet ist, bei einer Straßenfahrt einem Führungsfahrzeug zu folgen, welches entlang einer Führungs-Fahrspur fährt, wobei die Steuervorrichtung dazu eingerichtet ist:
- durch wenigstens eine Trägheitsmessvorrichtung jeweils Trägheitsmesswerte zu ermitteln, die wenigstens einer mehrdimensionalen Beschleunigung entsprechen, wobei erste Trägheitsmesswerte durch eine an der Landmaschine angeordnete erste Trägheitsmessvorrichtung ermittelt werden, wobei wenigstens auf den ersten Trägheitsmesswerten basierende erste Kinematikdaten ermittelt werden, die eine Kinematik der Landmaschine beschreiben,
- wenigstens teilweise basierend auf den ermittelten Trägheitsmesswerten, Fahrspur-Informationen betreffend das Führungsfahrzeug zu ermitteln und die ersten Kinematikdaten hiermit abzugleichen,
- in Abhängigkeit vom Ergebnis des Abgleichs automatisch Lenkkommandos für wenigstens eine lenkbare Achse der Landmaschine zu ermitteln, um die Landmaschine angepasst an die Führungs-Fahrspur zu lenken, und
- die Landmaschine automatisch durch die Lenkkommandos zu lenken.

Die genannten Begriffe wurden bereits oben mit Bezug auf das erfindungsgemäße Lenkverfahren erläutert und werden daher nicht nochmals erklärt. Vorteilhafte Ausgestaltungen der erfindungsgemäßen Steuervorrichtung entsprechen denen des erfindungsgemäßen Lenkverfahrens.

Die Steuervorrichtung weist normalerweise eine Mehrzahl von Komponenten auf, die räumlich getrennt voneinander angeordnet sein können. Insbesondere kann sie wenigstens eine Trägheitsmessvorrichtung und eine hiervon räumlich getrennte Steuereinheit aufweisen. Auch wenigstens ein Aktor, durch den die wenigstens eine Achse gelenkt wird, kann als Teil der Steuervorrichtung angesehen werden. Die Steuervorrichtung kann ausschließlich an der Landmaschine angeordnet sein, sie kann aber auch teilweise am Führungsfahrzeug oder - soweit vorhanden - an der Koppelstange angeordnet sein. Es wäre auch möglich, dass Teile der Steuervorrichtung außerhalb der aus Führungsfahrzeug und Landmaschine gebildeten Fahrzeuggruppe angeordnet sind. ZUM BEISPIEL könnte eine Steuereinheit stationär oder auf einem weiteren Fahrzeug angeordnet sein, welches zum Beispiel der Fahrzeuggruppe folgt oder ihr vorausfährt. In einem solchen Fall kann die Steuereinheit drahtlos mit der wenigstens einen Trägheitsmessvorrichtung und anderen Komponenten der Steuervorrichtung kommunizieren.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Draufsicht einer Straßenkreuzung sowie eines Führungsfahrzeugs und einer Landmaschine mit einer erfindungsgemäßen Steuervorrichtung;
- Fig. 2: ein Blockdiagramm von Komponenten der Steuervorrichtung sowie zwischen diesen übertragenen Informationen;
- Fig. 3: eine Draufsicht der Straßenkreuzung mit verschiedenen Fahrspuren; sowie
- Fig. 4: eine Flussdiagramm eines erfindungsgemäßen Lenkverfahrens zum Lenken der Landmaschine aus Fig. 1.

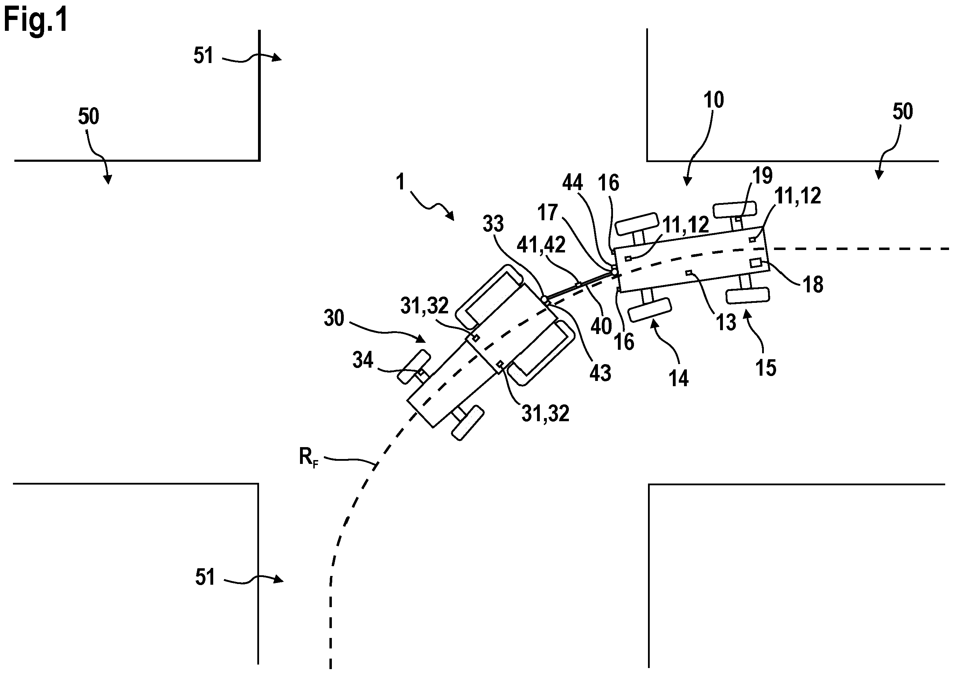

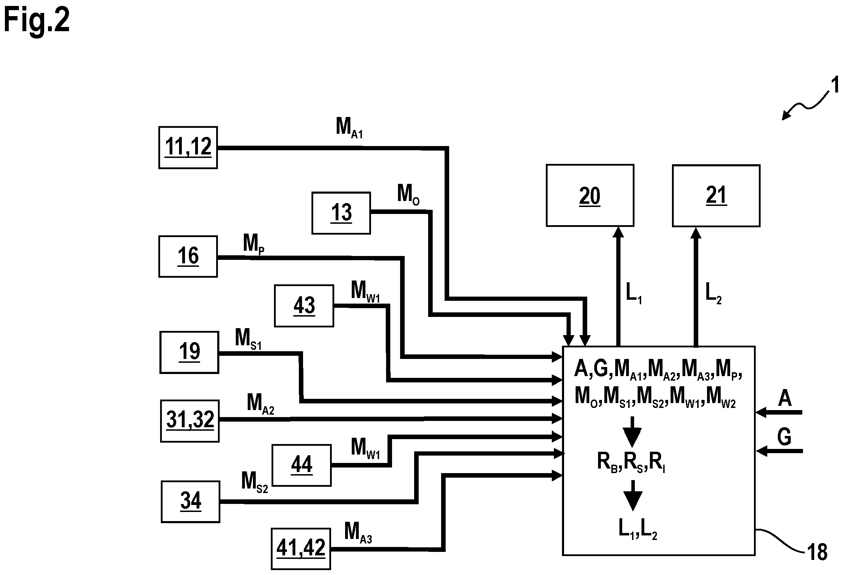

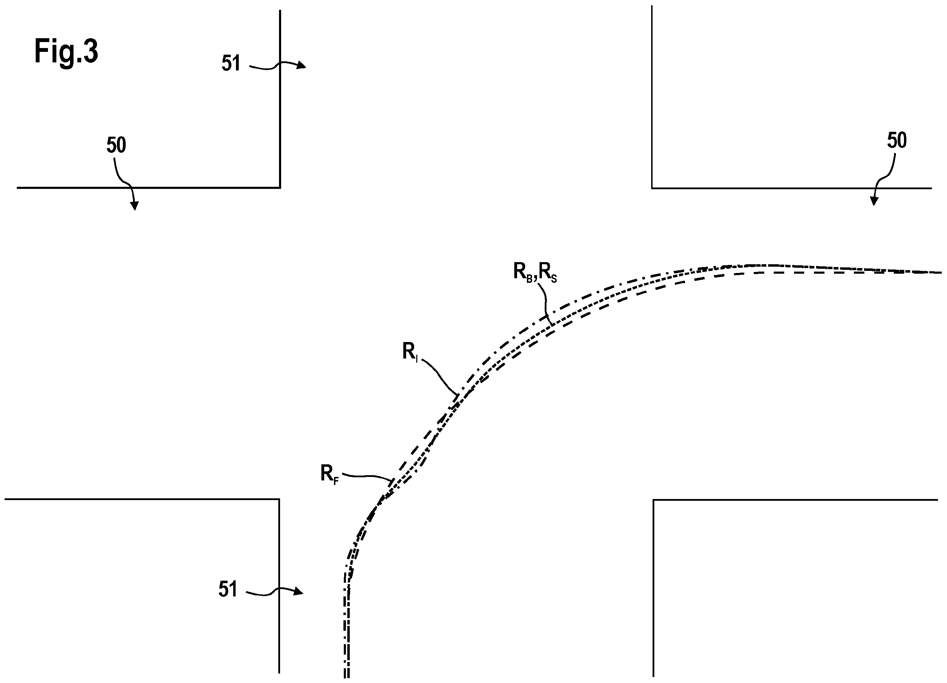

Fig. 1 zeigt eine Draufsicht einer Straßenkreuzung mit einer ersten Straße 50 sowie einer zweiten Straße 51. Ein Gespann aus einem Führungsfahrzeug 30 sowie einer hieran über eine Koppelstange 40 angekoppelten Landmaschine 10 ist dabei, von der ersten Straße 50 in die zweite Straße 51 abzubiegen. Dabei fährt das Führungsfahrzeug 30, welches in diesem Beispiel als Traktor dargestellt ist, entlang einer Führungs-Fahrtroute R_{F}, die in Fig.1 und 3 als lang gestrichelte Linie dargestellt ist. Die Landmaschine 10 verfügt über eine Vorderachse 14 sowie eine Hinterachse 15, die jeweils aktiv lenkbar sind mittels eines vorderen Lenkaktors 20 sowie eines hinteren Lenkaktors 21 (dargestellt im Blockdiagramm in Fig. 2). Die Koppelstange 40 ist in einem vorderen Gelenkpunkt 33 schwenkbar mit dem Führungsfahrzeug 30 verbunden und in einem hinteren Gelenkpunkt 17 schwenkbar mit der Landmaschine 10 verbunden. In den genannten Gelenkpunkten 17, 33 ist sie frei schwenkbar und überträgt ansonsten nur Zug- und Druckkräfte parallel zu ihrer Verlaufsrichtung. Es werden seitens des Führungsfahrzeugs 30 keinerlei Lenkkommandos an die Landmaschine 10 übertragen.

Um die Achsen 14, 15 der Landmaschine 10 derart lenken zu können, dass sie in vorgesehener Weise dem Führungsfahrzeug 30 folgt, ist eine Steuervorrichtung 1 vorgesehen, deren Komponenten im Blockdiagramm in Fig. 2 gemeinsam dargestellt sind. Wesentliche Bestandteile der Steuervorrichtung 1 sind eine Steuereinheit 18, die an der Landmaschine 10 angeordnet ist sowie eine erste Trägheitsmessvorrichtung 11, die in diesem Fall zwei zueinander beabstandete IMUs 12 aufweist. Die IMUs 12 übertragen an die Steuereinheit 18 erste Trägheitsmesswerte M_{A1}, die einer mehrdimensionalen Beschleunigung und einer mehrdimensionalen Winkelbeschleunigung entsprechen. die von den beiden IMUs 12 empfangenen ersten Trägheitsmesswerte M_{A1} sind im Prinzip zueinander redundant, was genutzt wird, um einen Abgleich durchzuführen und mögliche Messfehler zu korrigieren. Optional kann die Landmaschine 10 einen oder mehrere Zusatzsensoren 13, 16, 19 aufweisen. Bspw. kann ein Orientierungssensor 13, der als Magnetometer ausgebildet sein kann, dazu genutzt werden, Orientierungsmesswerte Mo zu ermitteln, die einer Orientierung, also räumlichen Ausrichtung, der Landmaschine 10 entsprechen. Positionssensoren 16 können Positionsmesswerte M_{P} ermitteln, die einer Relativposition des Führungsfahrzeug 30 zur Landmaschine 10 entsprechen. Diese Positionssensoren 16 könnten bspw. als Radar- oder Lidar-Sensoren ausgebildet sein. Schließlich kann ein erster Wegstreckensensor 19, der auch als Odometer bezeichnet werden kann, erste Wegstreckenmesswerte M_{S1} ermitteln, die einer zurückgelegten Wegstrecke der Landmaschine 10 entsprechen.

Das Führungsfahrzeug 30 weist eine zweite Trägheitsmessvorrichtung 31 auf, die ebenfalls zwei beabstandete IMUs 32 aufweist. Die IMUs 32 übertragen an die Steuereinheit 18 (bspw. drahtlos) zweite Trägheitsmesswerte M_{A2}, die einer mehrdimensionalen Beschleunigung und einer mehrdimensionalen Winkelbeschleunigung entsprechen. Ebenfalls dargestellt ist ein zweiter Wegstreckensensor 34, der zweite Wegstreckenmesswerte M_{S2} ermittelt, die einer zurückgelegten Wegstrecke des Führungsfahrzeug 30 entsprechen.

Die Koppelstange 40 weist eine dritte Trägheitsmessvorrichtung 41 auf, die in diesem Fall durch eine einzige IMU 42 gebildet ist. Die IMU 42 überträgt an die Steuereinheit 18 (bspw. drahtlos) dritte Trägheitsmesswerte M_{A3}, die wiederum einer mehrdimensionalen Beschleunigung und einer mehrdimensionalen Winkelbeschleunigung entsprechen. Außerdem ist am vorderen Gelenkpunkt 33 ein erster Winkelsensor 43 angeordnet. Dieser ermittelt erste Winkelmesswerte M_{W1}, die einem Schwenkwinkel der Koppelstange 40 gegenüber dem Führungsfahrzeug 30 entsprechen. Ein am hinteren Gelenkpunkt 17 angeordneter zweiter Winkelsensor 44 ermittelt zweite Winkelmesswerte M_{W2}, die einem Schwenkwinkel der Koppelstange 40 gegenüber der Landmaschine 10 entsprechen. Auch die Winkelmesswerte M_{W1}, M_{W2} können drahtlos an die Steuereinheit 18 übertragen werden.

Fig. 1 und 2 zeigen eine Vielzahl an Sensoren, die normalerweise nicht alle gemeinsam zum Einsatz kommen. Vielmehr dienen die Figuren dazu, verschiedene Optionen zu illustrieren. Insbesondere sind in der Praxis normalerweise drei alternative Konfigurationen von Trägheitsmessvorrichtungen 11, 31, 41 von Bedeutung. Gemäß einer ersten Option ist nur die erste Trägheitsmessvorrichtung 11 vorgesehen, gemäß einer zweiten Option die erste Trägheitsmessvorrichtung 11 und die zweite Trägheitsmessvorrichtung 31, und gemäß einer dritten Option die erste Trägheitsmessvorrichtung 11 und die dritte Trägheitsmessvorrichtung 41. Im Zusammenhang mit der zweiten Option ist es ausdrücklich auch möglich, dass die Koppelstange 40 entfällt, so dass keine mechanische Verbindung zwischen dem Führungsfahrzeug 30 und der ihm folgenden Landmaschine 10 gegeben ist. Die weiteren, abgesehen von den Trägheitsmessvorrichtung in 11, 31, 41 gezeigten Zusatzsensoren 13, 16, 19, 34, 43, 44 sind grundsätzlich als optional anzusehen. Die Ergänzung eines oder mehrerer dieser Zusatzsensoren 13, 16, 19, 34, 43, 44 ist allerdings in vielen Fällen sinnvoll, um die Präzision der Steuervorrichtung 1 zu verbessern. Dies gilt insbesondere dann, keine die Koppelstange 40 vorhanden ist.

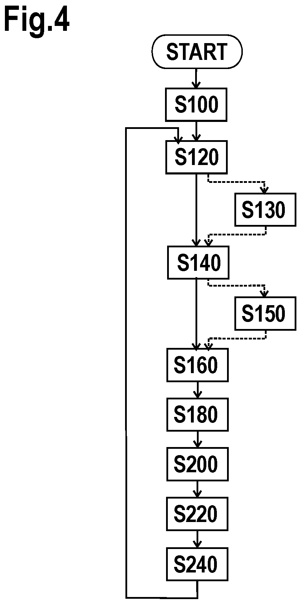

Die Steuervorrichtung 1 führt ein erfindungsgemäßes Lenkverfahren durch, das nun mit Bezug auf das Flussdiagramm in Fig. 4 sowie ergänzend mit Bezug auf Fig. 2 und 3 erläutert wird. In einem ersten Schritt S100 erfolgt eine Initialisierung der Steuereinheit 18, bei welcher Geometriedaten G der Landmaschine 10, des Führungsfahrzeug 30 und der Koppelstange 40 geladen werden. Wie bereits erwähnt, kann die Koppelstange 40 optional entfallen, so dass auch keine diesbezüglichen Geometriedaten geladen werden. Nachfolgend wird die Option, die Koppelstange 40 wegzulassen, nicht jedes Mal erwähnt. Die Geometriedaten G können unterschiedliche Aspekte der Geometrie beschreiben, bspw. Länge, Breite, Achsabstand, Spurbreite, Anordnung der Gelenkpunkte 17, 33 etc. Außerdem werden Anfangswerte A bestimmt, insbesondere die anfängliche Position und Orientierung von Landmaschine 10, Führungsfahrzeug 30 und Koppelstange 40, deren Geschwindigkeiten und Winkelgeschwindigkeiten. Letztere sind normalerweise gleich Null, da die Initialisierung typischerweise im Stillstand erfolgt. Die anfängliche Position der Landmaschine 10 kann bspw. als Koordinatenursprung gewählt werden oder mit einem anderen Standardwert initialisiert werden, ebenso kann ihrer Orientierung mit einem Winkel von 0° oder einem anderen Standardwert initialisiert werden. Es wäre allerdings auch möglich, die Orientierung über den Orientierungssensor 13 zu bestimmen. Die Position und Ausrichtung der Koppelstange 40 können bspw. mittels des hinteren Winkelsensors 44 in Kombination mit der bekannten Geometrie der Koppelstange 40 ermittelt werden. Position und Ausrichtung der Zugmaschine 30 können mittels beider Winkelsensoren 43, 44 in Kombination mit den Geometriedaten der Koppelstange 40 und der Zugmaschine 30 bestimmt werden. Alternativ oder zur Verbesserung der Genauigkeit zusätzlich könnten auch die Positionssensoren 16 genutzt werden.

Nach der Initialisierung werden im Schritt S120 die ersten Trägheitsmesswerte M_{A1} sowie optional die zweiten Trägheitsmesswerte M_{A2} und/oder die dritten Trägheitsmesswerte M_{A3} gemessen und, wie im Blockdiagramm in Fig. 2 dargestellt, an die Steuereinheit 18 gesendet. Diese berechnet in Schritt S140 auf Basis der ersten Trägheitsmesswerte M_{A1} erste Kinematikdaten der Landmaschine 10. Insbesondere können durch numerische Integration der Beschleunigung oder Winkelbeschleunigung eine aktuelle Geschwindigkeit und Winkelgeschwindigkeit sowie eine aktuelle Position und Orientierung berechnet werden, wobei die Anfangswerte A benötigt werden. Optional können in einem zwischengeordneten Schritt S130 zusätzliche Sensordaten abgefragt werden, bspw. Wegstreckendaten M_{S1} des ersten Wegstreckensensors 19, um den ermittelten Wert für die aktuelle Position zu präzisieren, oder Orientierungsdaten Mo des Orientierungssensors 13, um die Präzision der ermittelten Orientierung zu verbessern. Basierend hierauf wird als Teil der ersten Kinematikdaten eine Ist-Fahrspur R_{I} der Landmaschine 10 berechnet, welche in Fig. 3 als strichpunktierte Linie dargestellt ist.

Des Weiteren werden in einem Schritt S160, der auch vor Schritt S140 oder zeitgleich mit diesem durchgeführt werden könnte, auf Basis von Trägheitsmesswerten M_{A1}, M_{A2}, M_{A3} Fahrspur-Informationen betreffend das Führungsfahrzeug 30 ermittelt. Hierzu bestehen unterschiedliche Möglichkeiten, die im Wesentlichen davon abhängen, welche der o.g. drei Optionen genutzt wird. Sofern entsprechend der ersten Option lediglich die ersten Trägheitsmesswerte M_{A1} zur Verfügung stehen, kann insbesondere aus einer seitlichen Beschleunigung der Landmaschine 10 auf einer Fahrtrichtungsänderung des Führungsfahrzeug 30 geschlossen werden, sowohl qualitativ als auch quantitativ. Dabei lässt sich die Präzision verbessern, wenn zusätzlich wenigstens einer der Winkelsensoren 43, 44, der zweite Wegstreckensensor 34 und/oder die Positionssensoren 16 einbezogen werden, deren Messwerte im Schritt S130 eingelesen werden können. Sofern gemäß der zweiten Option die zweiten Trägheitsmesswerte M_{A2} zur Verfügung stehen, können prinzipiell anhand der ermittelten Beschleunigung und Winkelbeschleunigung durch numerische Integration die aktuelle Position, Orientierung, Geschwindigkeit und Winkelgeschwindigkeit des Führungsfahrzeugs 30 bestimmt werden. Auch hier kann durch Einbeziehung wenigstens eines der Winkelsensoren 43, 44, des zweiten Wegstreckensensors 34 und/oder der Positionssensoren 16 eine verbesserte Präzision erreicht werden. Sofern gemäß der dritten Option die dritten Trägheitsmesswerte M_{A3}, nicht jedoch die zweiten Trägheitsmesswerte M_{A2} zur Verfügung stehen, können anhand der ermittelten Beschleunigung und Winkelbeschleunigung durch numerische Integration die aktuelle Position, Orientierung, Geschwindigkeit und Winkelgeschwindigkeit der Koppelstange 40 bestimmt werden. In einem zwischengeordneten Schritt S150 kann eine Bahnkurve der Koppelstange 40 ermittelt werden. Durch Kombination mit den bekannten Geometriedaten G von Landmaschine 10, Führungsfahrzeug 30 und Koppelstange 40 lassen sich hieraus Position, Orientierung, Geschwindigkeit und Winkelgeschwindigkeit des Führungsfahrzeug 30 ermitteln. Auch hier können wenigstens einer der Winkelsensoren 43, 44, der zweite Wegstreckensensor 34 und/oder die Positionssensoren 16 einbezogen werden.

In jedem Fall lassen sich zweite Kinematikdaten des Führungsfahrzeug 30 ermitteln und insbesondere eine Berechnungs-Fahrspur R_{B}, die in Fig. 3 als kurz gestrichelte Linie dargestellt ist. Aufgrund von verschiedenen Einflüssen wie Messfehlern und numerischen Fehlern weicht die Berechnungs-Fahrspur R_{B} teilweise von der tatsächlichen Führungs-Fahrspur R_{F} ab. Die Abweichung ist allerdings geringfügig und beeinträchtigt die grundsätzliche Funktion der Steuervorrichtung 1 nicht.

Basierend auf der Berechnungs-Fahrspur R_{B} wird in Schritt S180 eine Soll-Fahrspur Rs für die Landmaschine 10 ermittelt. Diese ist im gezeigten Beispiel mit der Berechnungs-Fahrspur Rs identisch, d. h. es ist vorgesehen, dass die Landmaschine 10 exakt in der Spur des Führungsfahrzeug 30 erfolgt. Alternativ wäre auch bspw. in einer Kurve ein seitlicher Versatz denkbar. In einem weiteren Schritt S200 wird die Soll-Fahrspur Rs mit der Ist-Fahrspur R_{I} abgeglichen und in Schritt S220 werden in Abhängigkeit vom Ergebnis des Abgleichs Lenkkommandos L₁, L₂ für die lenkbaren Achsen 14, 15 ermittelt. Diese Lenkkommandos L₁, L₂ dienen selbstverständlich dazu, die Ist-Fahrspur R_{I} an die Soll-Fahrspur Rs anzugleichen. In einem weiteren Schritt S240 wird die Landmaschine 10 mittels der Lenkaktoren 20, 21 entsprechend der Lenkkommandos L₁, L₂ gelenkt. Danach kehrt das Verfahren zu Schritt S120 zurück und die beschriebenen Schritte werden wiederholt.

## Patentansprüche

1. Lenkverfahren für eine Landmaschine (10), welche während einer Straßenfahrt einem Führungsfahrzeug (30) folgt, welches entlang einer Führungs-Fahrspur (R_{F}) fährt, wobei:
- durch wenigstens eine Trägheitsmessvorrichtung (11, 31, 41) jeweils Trägheitsmesswerte (M_{A1}, M_{A2}, M_{A3}) ermittelt werden (S120), die wenigstens einer mehrdimensionalen Beschleunigung entsprechen, wobei erste Trägheitsmesswerte (M_{A1}) durch eine an der Landmaschine (10) angeordnete erste Trägheitsmessvorrichtung (11) ermittelt werden, wobei wenigstens auf den ersten Trägheitsmesswerten (M_{A1}) basierende erste Kinematikdaten ermittelt werden (S140), die eine Kinematik der Landmaschine (10) beschreiben,
- wenigstens teilweise basierend auf den ermittelten Trägheitsmesswerten (M_{A1}, M_{A2}, M_{A3}), Fahrspur-Informationen betreffend das Führungsfahrzeug (20) ermittelt werden (S160) und die ersten Kinematikdaten hiermit abgeglichen werden (S200),
- in Abhängigkeit vom Ergebnis des Abgleichs automatisch Lenkkommandos (L₁, L₂) für wenigstens eine lenkbare Achse (14, 15) der Landmaschine (10) ermittelt werden (S220), um die Landmaschine (10) angepasst an die Führungs-Fahrspur (R_{F}) zu lenken, und
- die Landmaschine (10) automatisch durch die Lenkkommandos (L₁, L₂) gelenkt wird (S240).

2. Lenkverfahren nach Anspruch 1, **dadurch gekennzeichnet, dass** die ermittelten Fahrspur-Informationen einer Berechnungs-Fahrspur (R_{B}) des Führungsfahrzeugs (30) entsprechen und die ersten Kinematikdaten einer Ist-Fahrspur (R_{I}) der Landmaschine (10) entsprechen, wobei die Ist-Fahrspur (R_{I}) mit einer von der Berechnungs-Fahrspur (Rs) abgeleiteten Soll-Fahrspur (Rs) abgeglichen wird (S220) und in Abhängigkeit vom Ergebnis des Abgleichs die Lenkkommandos (L₁, L₂) ermittelt werden (S220).

3. Lenkverfahren nach einem der vorangehenden Ansprüche, **dadurch gekennzeichnet, dass** die Landmaschine (10) durch eine zug- und druckübertragende Koppelstange (40) mit dem Führungsfahrzeug (30) verbunden ist, wobei die Koppelstange (40) sowohl mit dem Führungsfahrzeug (30) als auch mit der Landmaschine (10) schwenkbar verbunden ist.

4. Lenkverfahren nach einem der vorangehenden Ansprüche, **dadurch gekennzeichnet, dass** durch eine am Führungsfahrzeug (30) angeordnete zweite Trägheitsmessvorrichtung (31) zweite Trägheitsmesswerte (M_{A2}) ermittelt werden und die Fahrspur-Informationen wenigstens teilweise basierend auf den zweiten Trägheitsmesswerten (M_{A2}) ermittelt werden.

5. Lenkverfahren nach einem der vorangehenden Ansprüche, **dadurch gekennzeichnet, dass** wenigstens auf den zweiten Trägheitsmesswerten (M_{A2}) basierende zweite Kinematikdaten ermittelt werden, die eine Kinematik des Führungsfahrzeugs (30) beschreiben.

6. Lenkverfahren nach einem der vorangehenden Ansprüche, **dadurch gekennzeichnet, dass** eine an der Koppelstange (40) angeordnete dritte Trägheitsmessvorrichtung (41) dritte Trägheitsmesswerte (M_{A3}) ermittelt und die Fahrspur-Informationen wenigstens teilweise basierend auf den dritten Trägheitsmesswerten (M_{A3}) ermittelt werden.

7. Lenkverfahren nach einem der vorangehenden Ansprüche, **dadurch gekennzeichnet, dass** wenigstens teilweise basierend auf den dritten Trägheitsmesswerten (M_{A3}) Bewegungsbahn-Informationen über eine Bewegungsbahn der Koppelstange ermittelt werden (S150) und die Fahrspur-Informationen wenigstens teilweise auf den Bewegungsbahn-Informationen basieren.

8. Lenkverfahren nach einem der vorangehenden Ansprüche, **dadurch gekennzeichnet, dass** die Fahrspur-Informationen und/oder die ersten Kinematikdaten teilweise basierend auf Geometriedaten (G) ermittelt werden, die eine Geometrie des Führungsfahrzeug (30), der Koppelstange (40) und/oder der Landmaschine (10) beschreiben.

9. Lenkverfahren nach einem der vorangehenden Ansprüche, **dadurch gekennzeichnet, dass** die Fahrspur-Informationen und/oder die ersten Kinematikdaten zusätzlich zu den Trägheitsmesswerten (M_{A1}, M_{A2}, M_{A3}) teilweise basierend auf Messwerten (M_{P}, M_{O}, M_{S1}, M_{S2}, M_{W1}, M_{W2}) wenigstens eines Zusatzsensors (13, 16, 19, 34, 43, 44) ermittelt werden.

10. Lenkverfahren nach einem der vorangehenden Ansprüche, **dadurch gekennzeichnet, dass** wenigstens ein Zusatzsensor (13, 16, 19, 34, 43, 44) als Winkelsensor (43, 44) ausgebildet ist, der Winkelmesswerte (M_{W1}, M_{W2}) ermittelt, die einem Relativwinkel der Koppelstange (40) gegenüber dem Führungsfahrzeug (30) und/oder der Landmaschine (10) entsprechen.

11. Lenkverfahren nach einem der vorangehenden Ansprüche, **dadurch gekennzeichnet, dass** wenigstens ein Zusatzsensor (13, 16, 19, 34, 43, 44) als Orientierungssensor (13) ausgebildet ist, der Orientierungsmesswerte (Mo) ermittelt, die einer Orientierung der Landmaschine (10), der Koppelstange (40) und/oder des Führungsfahrzeugs (30) gegenüber einer Umgebung derselben entsprechen.

12. Lenkverfahren nach einem der vorangehenden Ansprüche, **dadurch gekennzeichnet, dass** wenigstens ein Zusatzsensor (13, 16, 19, 34, 43, 44) als Wegstreckensensor (19, 34) ausgebildet ist, der Wegstreckenmesswerte (M_{S1}, M_{S2}) ermittelt, die einer zurückgelegten Wegstrecke der Landmaschine (10) und/oder des Führungsfahrzeugs (30) entsprechen.

13. Lenkverfahren nach einem der vorangehenden Ansprüche, **dadurch gekennzeichnet, dass** wenigstens ein Zusatzsensor (13, 16, 19, 34, 43, 44) als an der Landmaschine (10) angeordneter Positionssensor (16) ausgebildet ist, der Positionsmesswerte (M_{P}) ermittelt, die einer Relativposition des Führungsfahrzeugs (30) zur Landmaschine (10) entsprechen.

14. Lenkverfahren nach einem der vorangehenden Ansprüche, **dadurch gekennzeichnet, dass** wenigstens eine Trägheitsmessvorrichtung (11, 31, 41) eine Mehrzahl von inertialen Messeinheiten (12, 32, 42) aufweist, die zueinander redundante Messwerte liefern, wobei zwischen diesen Messwerten auftretende Diskrepanzen zur Fehlerkorrektur genutzt werden.

15. Steuervorrichtung (1) für eine Landmaschine (10), welche dazu eingerichtet ist, während einer Straßenfahrt einem Führungsfahrzeug (30) zu folgen, welches entlang einer Führungs-Fahrspur (R_{F}) fährt, wobei die Steuervorrichtung (1) dazu eingerichtet ist:
- durch wenigstens eine Trägheitsmessvorrichtung (11, 31, 41) jeweils Trägheitsmesswerte (M_{A1}, M_{A2}, M_{A3}) zu ermitteln (S120), die wenigstens einer mehrdimensionalen Beschleunigung entsprechen, wobei erste Trägheitsmesswerte (M_{A1}) durch eine an der Landmaschine (10) angeordnete erste Trägheitsmessvorrichtung (11) ermittelt werden, wobei wenigstens auf den ersten Trägheitsmesswerten (M_{A1}) basierende erste Kinematikdaten ermittelt werden (S140), die eine Kinematik der Landmaschine (10) beschreiben,
- wenigstens teilweise basierend auf den ermittelten Trägheitsmesswerten (M_{A1}, M_{A2}, M_{A3}), Fahrspur-Informationen betreffend das Führungsfahrzeug (20) zu ermitteln (S160) und die ersten Kinematikdaten hiermit abzugleichen (S200),
- in Abhängigkeit vom Ergebnis des Abgleichs automatisch Lenkkommandos (L₁, L₂) für wenigstens eine lenkbare Achse (14, 15) der Landmaschine (10) zu ermitteln (S220), um die Landmaschine (10) angepasst an die Führungs-Fahrspur (R_{F}) zu lenken, und
- die Landmaschine (10) automatisch durch die Lenkkommandos (L₁, L₂) zu lenken (S240).
